# EUROPÄISCHE PATENTANMELDUNG

(11) **EP 1 127 845 A2**
(43) Veröffentlichungstag der Anmeldung: **29.08.2001**
(21) Anmeldenummer: 01104127.4
(22) Anmeldetag: 21.02.2001
(51) Int. Cl.: C02F 1/04

(54) **Zyklonverdampfer**

(30) Priorität: 21.02.2000 DE 20002942 U
(71) Anmelder: Schilling, Roland, Dr.-Ing., 16540 Hohen Neuendorf (DE)
(72) Erfinder: Schilling, Roland, Dr.-Ing., 16540 Hohen Neuendorf (DE)
(74) Vertreter: Jostarndt, Hans-Dieter

(57) **Zusammenfassung**

Erfindungsgemäß zeichnet sich der Zyklonverdampfer dadurch aus, dass er mit einer Vorrichtung zur Verdampfung von mit Schadstoffen belasteten, wasserhaltigen Stoffen gekoppelt ist, wobei die Vorrichtung einen Behälter enthält, in dem durch Verdampfung Wasserdampf freigesetzt wird, wobei der Behälter eine Austrittsöffnung enthält, durch die der Wasserdampf freigesetzt werden kann, wobei ein Eingang des Zyklonverdampfer mit der Austrittsöffnung des Behälters gekoppelt ist und wobei der Zyklonverdampfer eine weitere Einlassöffnung enthält, durch die ein wasserhaltiger Stoff in den Zyklonverdampfer eingeführt werden kann.

## Beschreibung

Die Erfindung betrifft einen Zyklonverdampfer.

Gattungsgemäße Zyklonverdampfer werden eingesetzt, um Schadstoffe enthaltende Dämpfe oder Gase, insbesondere Rauchgase, von Schadstoffen zu befreien.

Zur Behandlung von mit Schadstoffen belasteten, wasserhaltigen Stoffen, wie Abwässer, Konzentrate und Schlämme, ist es aus dem Deutschen Gebrauchsmuster 94 07 437.2 bekannt, oberhalb eines Behälters, der mit diesen Stoffen befüllbar ist, eine Wärmequelle und mindestens eine Zuströmöffnung für einen Gasvolumenstrom anzuordnen, wobei die Zuströmöffnung im befüllten Zustand des Behälters oberhalb der Oberfläche der zu behandelnden Stoffe angeordnet und auf die Oberfläche der zu behandelnden Stoffe gerichtet ist.

Ferner ist es bekannt, dass Strahlungs-Verdunster- und - Verdampfer in Bezug auf in ihnen umgesetzte Energie einen schlechten Wirkungsgrad haben. Durch die Zufuhr von Infrarotstrahlung und anschließende Verdampfung entsteht ein weit über 480°C überhitzter Brüdendampf, der üblicherweise aus Wasserdampf und Rauchgas besteht.

Überhitzter Brüdendampf wird in Abhitze-Wärmetauschern abgekühlt. Um einen guten Wirkungsgrad der Abhitze-Wärmetauscher zu ermöglichen, ist es bekannt, den in dem Brüdendampf mitgeführten Staub mit Rußbläsern von Wärmetauscher-Flächen des Abtausch-Wärmetauschers abzublasen.

Der Erfindung liegt die Aufgabe zu Grunde, einen Zyklonverdampfer zu schaffen, der einen möglichst hohen Wirkungsgrad aufweist.

Erfindungsgemäß wird diese Aufgabe dadurch gelöst, dass der Zyklonverdampfer mit einer Vorrichtung zur Verdampfung von mit Schadstoffen belasteten, wasserhaltigen Stoffen gekoppelt ist, wobei die Vorrichtung einen Behälter enthält, in dem durch Verdampfung Wasserdampf freigesetzt wird, wobei der Behälter eine Austrittsöffnung enthält, durch die der Wasserdampf freigesetzt werden kann, wobei ein Eingang des Zyklonverdampfers mit der Austrittsöffnung des Behälters gekoppelt ist und wobei der Zyklonverdampfer eine weitere Einlassöffnung enthält, durch die ein wasserhaltiger Stoff in den Zyklonverdampfer eingeführt werden kann.

Es ist besonders zweckmäßig, dass die weitere Einlassöffnung eine Düse ist. Hierdurch kann die Flüssigkeit mit einer hohen Geschwindigkeit in den Zyklonverdampfer eingebracht werden.

Mit Hilfe der erfindungsgemäßen Vorrichtung kann ein Verfahren zur Behandlung von mit Schadstoffen belasteten, wasserhaltigen Stoffen mit einer direkten Abwärmenutzung von entstehendem Brüdendampf durchgeführt werden. Ferner wird hierdurch ein Rückhalten der Stäube ermöglicht.

Der Zyklonverdampfer ist ein konstruktiv einfacher Apparat, der in seinem Inneren kaum bewegte Teile hat. Der Wirkungsgrad wird durch das zusätzliche Eindüsen der normal zur Verdampfung anstehenden Flüssigkeit in der Gesamtleistung gesteigert. Außerdem wird in dem Brüdendampf enthaltener Staub abgeschieden.

Es ist besonders zweckmäßig, dass durch die Eindüsung von mit Schadstoffen belasteten, wasserhaltigen Stoffen die Temperatur des Brüdendampfes bis in die Nähe des Taupunktes abgesenkt wird. Ferner ist es vorteilhaft, dass die zu behandelnden Stoffe im Gleich- und Gegenstrom in strömendem Brüdendampf eingedüst werden.

Dieses Eindüsen erfolgt zweckmäßigerweise so, dass die Staubteilchen von eingedüsten Flüssigkeitströpfchen absorbiert werden und anschließend mit den Staubteilen aus den Flüssigkeitströpfchen ausgeschieden werden.

Ferner ist es vorteilhaft, dass die weitere Einlassöffnung so regelbar ist, dass ein Druckverlust in dem Zyklonverdampfer durch eine Regelung der Zufuhr des wasserhaltigen Stoffes vermieden wird.

Es ist zweckmäßig, dass der Zyklonverdampfer mit einem Ventilator ausgestattet ist, der eine Einlassöffnung enthält.

Ferner ist es zweckmäßig, den Zyklonverdampfer so auszugestalten, dass er einen Filter enthält, der vorzugsweise an der Einlassöffnung des Ventilators angebracht ist. Vorteilhafterweise ist der Zyklonverdampfer so gestaltet, dass er einen Einlass für Treibluft vorzugsweise als Injektor enthält.

Es ist vorteilhaft, dass der Zyklonverdampfer eine Auslassöffnung für einen Auslass von abgekühltem Brüdendampf und die Treibluft enthält.

Eine bevorzugte Ausführungsform des Zyklonverdampfers zeichnet sich dadurch aus, dass er eine Schleuse (14) für einen Auslass von abgeschiedenem Staub (13) enthält.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Zeichnungen.

Von den Abbildungen zeigen:
- Fig. 1: eine Seitenansicht eines Zyklonverdampfers und
- Fig. 2: eine Draufsicht auf einen Zyklonverdampfer mit Einlassdüsen.

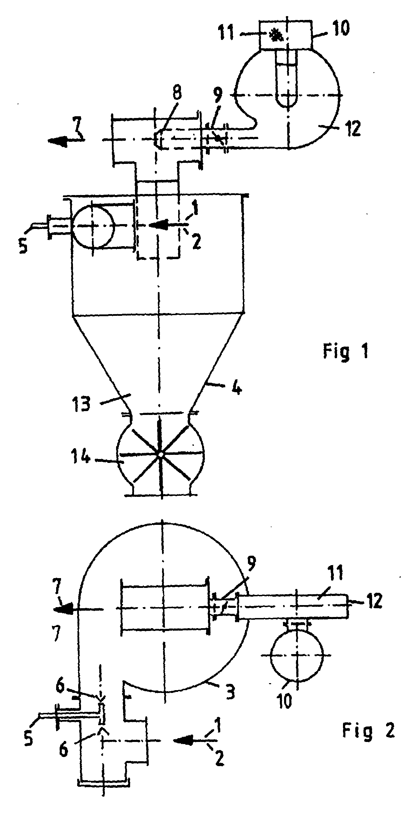

In den Fig. 1 und 2 ist ein Zyklonverdampfer dargestellt, in den Brüdendampf (1) und Staub (2) eingeführt werden kann.

Der Zyklonverdampfer (3) ist in Fig. 2 näher dargestellt.

Er enthält eine Einlassöffnung, durch die der Brüdendampf (1) und in ihm enthaltener Staub (2) eingeführt werden können.

In einem Strömungskanal (20) für den Brüdendampf (1) und den Staub (2) befinden sich zwei Düsen (6), deren Auslassrichtung sich im Wesentlichen parallel zu der Strömungsrichtung des Brüdendampfes (1) und des Staubes (2) erstreckt.

Die Düsen (6) sind mit einer Einlassöffnung für die Zufuhr einer zu behandelnden Flüssigkeit (5) verbunden.

Im Inneren des Zyklonverdampfers (3) befindet sich ein Injektor (8) für eine Zufuhr von Treibluft (11).
Zur Erzeugung der Treibluft (11) dient ein Ventilator (12), der eine Einlassöffnung enthält, an der sich ein Filter (10) befindet.

Mit Hilfe des dargestellten Zyklonverdampfers kann ein Verfahren zur Behandlung von mit Schadstoffen belasteten, wasserhaltigen Stoffen wie folgt durchgeführt werden:

In einer Vorrichtung zur Eindampfung von mit Schadstoffen belasteten, wasserhaltigen Stoffen entsteht ein überhitzter Brüdendampf (1), bestehend aus Rauchgas, Wasserdampf und Staub (2) und gelangt in den Zyklonverdampfer (3), beziehungsweise in den Ausdämpftopf (4).

Zum Betrieb des Zyklonverdampfers (3) und des Ausdämpftopfes (4) ist ein Unterdruck zweckmäßig. Über den Filter (10) wird die Treibluft (11) vom Ventilator (12) angesaugt und mit der Klappe (9) und dem Injektor (8) der benötigte Unterdruck hergestellt.

Ein wichtiger Unterschied zwischen dem Zyklonverdampfer (3) und dem Ausdämpftopf (4) ist, dass im Zyklonverdampfer durch Eindüsen (6) von Flüssigkeit (5) das überhitzte Rauchgas (1) und der Staub (2) abgekühlt werden. Der bis in die Nähe des Taupunktes abgekühlte Brüdendampf (7) verlässt die Anlage. Der durch Zentrifugalkraft abgeschiedene Staub (13) verläßt die Anlage über eine Schleuse (14).

Der Ausdämpftopf dient dazu, aus dem Staub (2) enthaltenden, überhitzten Brüdendampf (1) den Staub (13) abzuscheiden.

### Bezugszeichenliste

- 1: Brüdendampf
- 2: Staub
- 3: Zyklonverdampfer
- 4: Ausdampftopf
- 5: Flüssigkeit
- 6: Düse
- 7: kalter Brüdendampf
- 8: Injektor
- 9: Regelklappe
- 10: Filter
- 11: Treibluft
- 12: Ventilator
- 13: abgeschiedener Staub
- 14: Schleuse
- 20: Strömungskanal

## Patentansprüche

1. Zyklonverdampfer, **dadurch gekennzeichnet,** dass er mit einer Vorrichtung zur Verdampfung von mit Schadstoffen belasteten, wasserhaltigen Stoffen gekoppelt ist, wobei die Vorrichtung einen Behälter enthält, in dem durch Verdampfung Wasserdampf freigesetzt wird, wobei der Behälter eine Austrittsöffnung enthält, durch die der Wasserdampf freigesetzt werden kann, wobei ein Eingang des Zyklonverdampfers mit der Austrittsöffnung des Behälters gekoppelt ist und wobei der Zyklonverdampfer eine weitere Einlassöffnung enthält, durch die ein wasserhaltiger Stoff in den Zyklonverdampfer eingeführt werden kann.

2. Zyklonverdampfer nach Anspruch 1, **dadurch** g**ekennzeichnet,** dass die weitere Einlassöffnung eine Düse ist.

3. Zyklonverdampfer nach einem oder beiden der Ansprüche 1 oder 2, **dadurch gekennzeichnet**, dass durch die Eindüsung von mit Schadstoffen belasteten, wasserhaltigen Stoffen die Temperatur des Brüdendampfes bis in die Nähe des Taupunktes abgesenkt wird.

4. Zyklonverdampfer nach einem oder mehreren der Ansprüche 1 bis 3, **dadurch gekennzeichnet,** dass er einen Filter enthält.

5. Zyklonverdampfer nach einem oder mehreren der Ansprüche 1 bis 4, **dadurch gekennzeichnet,** dass der Zyklonverdampfer einen Filter enthält.

6. Zyklonverdampfer nach Anspruch 1 bis 5, **dadurch gekennzeichnet,** dass der Zyklonverdampfer (3) eine Auslassöffnung für einen Auslass von abgekühltem Brüdendampf (7) und die Treibluft (11) enthält.

7. Zyklonverdampfer nach einem oder mehreren der vorangegangenen Ansprüche, **dadurch gekennzeichnet,** dass er eine Schleuse (14) für einen Auslass von abgeschiedenem Staub (13) enthält.
